# FASCICULE DE BREVET EUROPEEN

(11) **EP 1 603 399 B1**
(45) Date de publication et mention de la délivrance du brevet: **23.12.2009**
(21) Numéro de dépôt: 04719993.0
(22) Date de dépôt: 12.03.2004
(51) Int. Cl.: A21D 8/04, A21D 13/00

(54) **LEVAIN PANAIRE, SON UTILISATION ET PRODUITS DE BOULANGERIE CUITS SUSCEPTIBLES D'ÊTRE OBTENUS**
SAUERTEIG, VERWENDUNG DAVON UND DARAUS ERHÄLTLICHE BÄCKEREIPRODUKTE
A SOURDOUGH, THE USE THEREOF AND BAKERY PRODUCTS OBTAINABLE FROM THE SAME

(30) Priorité: 12.03.2003 EP 03005610; 31.07.2003 EP 03017340
(43) Date de publication de la demande: 14.12.2005
(73) Titulaire: LESAFFRE et Cie, F-75001 Paris (FR)
(72) Inventeur: LEJEUNE, Pascal, F-59200 Tourcoing (FR); BRYCKAERT, Emilie, F-59100 Roubaix (FR); FONCHY-PENOT, Evelyne, F-62840 Fleurbaix (FR); COLAVIZZA, Didier, 59100 Roubaix (FR)
(74) Mandataire: Ahner, Francis
(86) Numéro de dépôt international: PCT/EP2004/002626
(87) Numéro de publication internationale: WO 2004/080187

(56) Documents cités:
- DE-U- 20 116 067
- FR-A- 2 716 077
- US-A- 3 681 083
- US-A- 5 500 231
- US-B1- 6 465 027
- PATENT ABSTRACTS OF JAPAN vol. 2000, no. 24, 11 mai 2001 (2001-05-11) -& JP 2001 204376 A (KANEGAFUCHI CHEM IND CO LTD), 31 juillet 2001 (2001-07-31)
- DATABASE FSTA [Online] INTERNATIONAL FOOD INFORMATION SERVICE (IFIS), FRANkFURT-MAIN, DE; 1989, BRÜMMER J M ET AL: "Zur Situation der Konservierung von Backwaren." XP002285013 Database accession no. 89-1-11-m0003 & GETREIDE MEHL UND BROT, vol. 42, no. 1, 1988, pages 17-21, DETMOLD, GERMANY
- ROSENQUIST H ET AL: "THE ANTIMICROBIAL EFFECT OF ORGANIC ACIDS, SOUR DOUGH AND NISIN AGAINST BACILLUS SUBTILIS AND B. LICHENIFORMIS ISOLATED FROM WHEAT BREAD" JOURNAL OF APPLIED MICROBIOLOGY, OXFORD, GB, vol. 85, no. 3, 1998, pages 621-631, XP008022618 ISSN: 1364-5072

## Description

La présente invention concerne un levain panaire prêt à l'emploi, un procédé pour sa préparation et son utilisation en panification.

Les spécificités de la panification au levain sont bien connues :
- obtention d'une flaveur appréciée de pain au levain, notamment caractérisée par une odeur aigrelette ou acétique de la mie ;
- obtention d'un pain ayant une texture particulière de pain au levain ;
- obtention d'un pain se conservant plus longtemps qu'un pain non au levain du même genre.

Ces caractéristiques de flaveur, de texture et de conservation sont dues à la fermentation opérée par les microorganismes vivants du levain, et notamment par ses bactéries. Elles font que le pain au levain est recherché par le consommateur.

Il est à noter que l'ensemble des qualités du pain au levain : flaveur, structure et conservation, ne peut être obtenu que par une incorporation dans la pâte à pain d'un levain prêt à l'emploi contenant une quantité suffisante de microorganismes vivants.

L'incorporation dans la pâte d'une farine préfermentée désactivée, sous forme déshydratée ou liquide, appelée souvent levain déshydraté ou sec ou encore liquide, ne permet pas d'obtenir l'ensemble des qualités du pain au levain traditionnel. Ces additifs connus dans le domaine de la boulangerie n'ont qu'un rôle d'apport de molécules aromatiques, telles que l'acide acétique et l'acide lactique. Ils ne permettent pas d'obtenir la texture caractéristique et la flaveur complète d'un pain au levain fermenté au moyen d'un levain traditionnel.

Les méthodes de panification utilisant un levain traditionnel présentent quatre inconvénients :
- la difficulté pour le boulanger de réaliser, lors de chaque panification, un levain ayant des caractéristiques (cultures vivantes de microorganismes, composition chimique) en substance identiques ;
- la faible durée de vie du levain traditionnel tout point, même à basse température,
- la contrainte journalière des rafraîchis, et
- la durée de la panification finale, déterminée par le temps entre la fin du pétrissage et l'enfournement, qui est typiquement de plus de 6 à 7 heures pour ce type de produit.

Le levain prêt à l'emploi, ou levain tout point selon la terminologie traditionnelle, est un levain prêt pour son incorporation dans la pâte à pain ou d'autres pâtes boulangères comme agent de fermentation.

En l'absence de tout rafraîchi, une acidification trop importante se développe dans le levain prêt à l'emploi traditionnel, ce qui provoque une disparition rapide des microorganismes vivants, c'est-à-dire capables de se multiplier et/ou de fermenter.

Pour conserver les caractéristiques d'un levain traditionnel, il est ainsi nécessaire d'opérer plusieurs rafraîchis quotidiens.

Un rafraîchi correspond à un nouvel apport de farine et d'eau au levain, conduisant, d'une part, à un apport aux microorganismes du levain de substances fermentescibles et, d'autre part, à une dilution du milieu (levain) en fermentation. Ces rafraîchis quotidiens rendent le travail des boulangers fastidieux.

Des installations souvent appelées "fermenteurs à levain liquide" ont été proposées afin de réduire le nombre de rafraîchis nécessaires et d'arriver à ce que les besoins quotidiens en prélèvements de levain pour la panification soient plus ou moins équivalents aux apports d'eau et de farine nécessaires à l'entretien du levain. Ces installations permettent de contrôler la température du levain, permettant ainsi sa conservation à basse température. Ces installations sont toutefois difficiles et délicates à gérer, surtout quand le levain contient une population mixte de levures et de bactéries.

Pour pallier l'inconvénient du manque de reproductibilité, la profession a eu recours à la préparation de levain prêt à l'emploi, souvent en une seule étape, à l'aide de concentrés de microorganismes pour panification. De tels concentrés de microorganismes, connus sous la dénomination "starters" sont décrits dans EP-A-0306692. Ils permettent d'obtenir un levain prêt à l'emploi en 18 à 24 heures. Cependant, ces levains prêts à l'emploi présentent toujours une faible durée de vie.

Un développement récent important est la mise au point d'un levain panaire prêt à l'emploi, qui se conserve à basse température pendant plusieurs semaines sans aucun rafraîchi et qui permet au boulanger d'utiliser, lors de chaque panification, un levain ayant des caractéristiques en substance identiques. De tels levains sont décrits dans EP-A-0953288.

Le levain panaire prêt à l'emploi décrit dans EP-A-0953288 contient au moins une farine de céréale non maltée et de l'eau, a été ensemencé par au moins une préparation de bactéries lactiques hétérofermentaires, a un pH entre 4 et 4,3 et apporte au moins 1 milliard de bactéries lactiques revivifiables par gramme pendant au moins 4 semaines s'il est conservé à moins de 10°C. Ce levain prêt à l'emploi permet la fermentation d'une pâte boulangère selon un schéma direct pour l'obtention d'un pain au levain.

Un facteur important pour l'obtention de la flaveur typique appréciée de pain au levain est le rapport entre, d'une part, la teneur en acide lactique et, d'autre part, la teneur en acide acétique de la pâte à pain. Le consommateur apprécie en particulier la flaveur obtenue par la présence de différentes quantités d'acide acétique dans la pâte à pain avant cuisson.

Dans le présent contexte, le terme « acide lactique » désigne l'acide lactique CH₃CHOHCOOH en tant que tel, les sels d'acide lactique et la forme CH₃CHOHCOO⁻ dissociée (anion) d'acide lactique. De manière analogue, le terme « acide acétique » désigne, dans le présent contexte, l'acide acétique CH₃COOH en tant que tel, les sels d'acide acétique et la forme CH₃COO⁻ dissociée (anion) d'acide acétique.

Dans le cas d'un pain au levain ou produit cuit analogue, ledit rapport entre la teneur en acide lactique et la teneur en acide acétique dans la pâte à cuire est pour une partie significative déterminé par la teneur en ces acides du levain prêt à l'emploi qu'on ajoute à la pâte.

Des caractéristiques du levain prêt à l'emploi qui jouent un rôle significatif dans la flaveur du pain au levain sont donc les teneurs respectives du levain prêt à l'emploi en acide lactique et en acide acétique, et le rapport entre ces deux teneurs.

Ce rapport entre, d'une part, la teneur en acide lactique et, d'autre part, la teneur en acide acétique d'un levain est exprimé par le quotient fermentaire ou QF qui est défini comme le rapport de la concentration molaire d'acide lactique du levain sur la concentration molaire d'acide acétique du levain.

Il est à noter que la flaveur obtenue par l'introduction séparée de ces acides dans le levain ou dans la pâte à pain ne permet pas d'obtenir la véritable flaveur d'un pain au levain, du fait de l'absence des autres composés aromatisants produits par les microorganismes tels que les bactéries lactiques. L'ajout séparé d'acides provoque par ailleurs de graves problèmes de texture sur la pâte et sur le produit cuit.

D'ailleurs, le consommateur désire en particulier acheter des pains au levain dits « naturels », ce qui implique que la pâte à pain consiste uniquement en des ingrédients naturels tels que la farine de céréale, l'eau, la farine de céréale maltée, de la biomasse, etc. à l'exclusion d'additifs dits « chimiques » tels que l'acide acétique et l'acide lactique purifiés ou purs.

Il existe aussi, dans certains pays, une réglementation interdisant l'utilisation de la dénomination « pain au levain » ou « pain au levain naturel » pour tout produit cuit obtenu à partir d'une pâte comportant de tels additifs chimiques.

Il serait intéressant pour le boulanger de pouvoir disposer de levains présentant des QF différents spécifiques voulus, et en particulier de pouvoir disposer de tels levains dans lesquels les deux acides ont été produits par les microorganismes présents dans le levain.

La présente invention permet au fabricant de levains, de préparer, avec une sélection appropriée de microorganismes, des levains prêt à l'emploi présentant des QF différents, et ceci de manière régulière.

La présente invention permet plus particulièrement au fabricant de levains de maîtriser, lors de la préparation d'un levain, le QF dudit levain grâce à l'incorporation dans le levain de bactéries lactiques homofermentaires qui sont non seulement capables de produire de l'acide lactique en consommant des sucres fermentescibles, mais qui sont également capables de produire de l'acide acétique en consommant de l'acide lactique en carence de sucres fermentescibles, ceci éventuellement en présence d'un accepteur d'électrons, c'est-à-dire en présence d'une substance capable d'accepter ou de gagner au moins un électron libéré lors de cette production d'acide acétique par lesdites bactéries lactiques homofermentaires.

Dans ce qui suit, ces bactéries lactiques sont désignées par l'expression « bactéries lactiques homofermentaires bio-transformatrices d'acide lactique ».

La présente invention permet en particulier au fabricant de levains de préparer de manière régulière des levains prêt à l'emploi qui présentent des QF différents et qui se conservent pendant plusieurs semaines à basse température.

La présente invention permet en outre au fabricant de levains de préparer de manière régulière des levains prêts à l'emploi qui présentent des QF différents et qui peuvent être incorporés dans la pâte boulangère comme agent de fermentation directement au pétrissage dans le cadre d'un schéma direct de panification au levain, c'est-à-dire un schéma avec un seul pétrissage. Dans un tel schéma direct de panification au levain, il n'y a pas d'étapes de préfermentation, autre que les fermentations lors de la préparation du levain prêt à l'emploi suivant l'invention.

La présente invention permet en particulier de préparer de manière régulière de tels levains qui peuvent être incorporés dans la pâte boulangère, comme agent de fermentation et de levée de cette pâte, directement au pétrissage dans le cadre d'un schéma direct de panification au levain avec une durée entre le début du pétrissage et la cuisson inférieure ou égale à 6 heures, voire de préférence inférieure ou égale à 4 heures.

La présente invention concerne d'abord un levain panaire prêt à l'emploi.

Dans le présent contexte, les termes « panification » et « panaire » ainsi que les termes « boulangerie » et « boulanger » doivent être interprétés de manière large comme se référant aux domaines de la boulangerie et de la viennoiserie, et en général au domaine de la production de produits cuits au four à partir de pâtes fermentées à base de farine. Ainsi, le levain panaire suivant l'invention peut être un levain panaire prêt à l'emploi destiné à la fabrication d'un produit de boulangerie de type pain, brioche ou viennoiserie.

Dans ce qui suit, sauf indication contraire, le terme « levain » ou « levain panaire » signifie systématiquement « levain (panaire) prêt à l'emploi ».

Le levain panaire prêt à l'emploi suivant l'invention consiste en un milieu de culture à base de farine contenant au moins une farine de céréale et de l'eau, ledit milieu de culture étant ensemencé et fermenté par une sélection de microorganismes qui comprend des bactéries lactiques, au moins une partie des bactéries lactiques de la sélection étant des bactéries lactiques homofermentaires bio-transformatrices d'acide lactique.

Dans le présent contexte, on désigne par « milieu de culture à base de farine », un milieu de culture dont les matières sèches ont comme ingrédient principal une ou des farines de céréale.

Le terme « farine de céréale » tel qu'utilisé dans le présent contexte, concerne les produits riches en amidon issus de la mouture de céréale. Ce terme couvre les farines d'une ou de plusieurs céréales non maltées, les farines d'une ou de plusieurs céréales maltées, ainsi que les farines d'une combinaison d'une ou plusieurs céréales non maltées avec une ou plusieurs céréales maltées. Le terme « farine de céréale » ne couvre par contre pas des dérivés dénaturés de la farine de céréale, tels que les produits appelés « farine gélatinisée » ou « farine prégélatinisée » ou des produits dits « farines » dont l'amidon a subi une hydrolyse complète ou quasi-complète.

Le levain suivant l'invention contient au moins 7g/l d'acide acétique. Le levain suivant l'invention contient optionnellement également de l'acide lactique.

Le QF du levain suivant l'invention est inférieur ou égal à 4,75.

Le levain suivant l'invention contient au moins 100 millions (10⁸) d'UFC (unités formant colonies) de bactéries lactiques par gramme, dont au moins 60% sont des UFC de bactéries lactiques homofermentaires bio-transformatrices d'acide lactique.

Le levain suivant l'invention présente un pH entre 3,8 et 4,5.

Suivant l'invention, la teneur du levain en sucres fermentescibles par les microorganismes du levain est inférieure à 5g/kg.

Le levain suivant l'invention comprend avantageusement au moins 1 milliard (10⁹) d'UFC de bactéries lactiques par gramme.

Les bactéries lactiques sont divisées en trois classes ou groupes distincte
- la classe ou groupe I couvre les bactéries lactiques dites homofermentaires strict ;
- la classe ou groupe II couvre les bactéries lactiques dites hétérofermentaires facultatif ou encore homofermentaires-hétérofermentaires facultatif ; et
- la classe ou groupe III couvre les bactéries lactiques dites hétérofermentaires strict.

Cette classification des bactéries lactiques est notamment décrite dans l'oeuvre de référence « Bactéries lactiques » par H. de Roissart et E.M. Luquet, publiée en 1994 par Lorica, ISBN : 2-9507477-0-1.

Le terme « bactéries lactiques homofermentaires » tel qu'utilisé dans le présent contexte couvre les bactéries lactiques des classes ou groupes I et II, c'est-à-dire les bactéries lactiques homofermentaires strict et les bactéries lactiques homofermentaires - hétérofermentaires facultatif. Le terme « homofermentaire » tel qu'utilisé dans le présent contexte englobe donc à la fois le terme « homofermentaire strict » et le terme « homofermentaire-hétérofermentaire facultatif ».

Les bactéries lactiques homofermentaires bio-transformatrices d'acide lactique du levain suivant l'invention sont donc choisies dans le groupe comprenant les bactéries lactiques homofermentaires strict, les bactéries lactiques homofermentaires-hétérofermentaires facultatif, et les mélanges desdites bactéries, lesdits mélanges pouvant être des mélanges de bactéries lactiques homofermentaires strict, des mélanges de bactéries lactiques homofermentaires-hétérofermentaires facultatif et des mélanges consistant en une ou plusieurs bactéries lactiques homofermentaires strict et une ou plusieurs bactéries lactiques homofermentaires - hétérofermentaires facultatif.

Dans le présent contexte, le terme « mélange de bactéries » se réfère à une combinaison de bactéries appartenant à différentes souches.

De manière avantageuse, dans le levain suivant l'invention, au moins 75%, et encore de préférence au moins 95% des UFC de bactéries lactiques sont des UFC de bactéries lactiques homofermentaires bio-transformatrices d'acide lactique. L'invention concerne en particulier de tels levains panaires dont la totalité ou en substance la totalité (c'est-à-dire au moins 99%) des UFC de bactéries lactiques sont des UFC de bactéries lactiques homofermentaires bio-transformatrices d'acide lactique.

De manière avantageuse, le levain panaire suivant l'invention présente un QF inférieur ou égal à 4,00, de préférence inférieur ou égal à 3,00.

Suivant une forme d'exécution, le levain panaire suivant l'invention contient au moins 10 g/l d'acide acétique. Le levain suivant l'invention comprend typiquement de l'acide acétique et de l'acide lactique. Ainsi, suivant une forme d'exécution utile, le levain panaire suivant l'invention présente un QF de 0,40 à 4,75, de préférence de 1,50 à 4,00 et encore de préférence de 2,00 à 3,00.

Le pH du levain suivant l'invention est de préférence de 4,0 à 4,3.

Le levain suivant l'invention présente avantageusement une teneur en sucres fermentescibles par les microorganismes du levain inférieure à 3g/kg, et encore de préférence inférieure à 1g/kg.

De manière générale, pour la conservation en substance inchangée du levain panaire à basse température, c'est-à-dire à une température égale ou inférieure à 8°C, de préférence inférieure à 4°C, il est souhaitable d'avoir dans le levain une teneur en sucres fermentescibles aussi basse que possible lors de cette conservation.

Comme indiqué ci-dessus, le levain panaire suivant l'invention contient au moins 10⁸ et de préférence au moins 10⁹ d'UFC de bactéries lactiques par gramme, dont au moins 60%, de préférence au moins 75%, et encore de préférence au moins 95% sont des UFC de bactéries lactiques homofermentaires bio-transformatrices d'acide lactique.

De manière avantageuse, lesdites UFC de bactéries lactiques homofermentaires bio-transformatrices d'acide lactique incluent des UFC de Lactobacilles homofermentaires.De préférence au moins 60%, encore de préférence au moins 75%, plus de préférence encore au moins 85%, et même toutes ou en substances toutes (au moins 99%) desdites UFC de bactéries lactiques homofermentaires bio-transformatrices d'acide lactique du levain suivant l'invention, sont des UFC de Lactobacilles homofermentaires. Comme indiqué ci-dessus en général par rapport aux bactéries lactiques homofermentaires, les Lactobacilles homofermentaires bio-transformateurs d'acide lactique du levain suivant l'invention sont donc choisis dans le groupe comprenant les Lactobacilles homofermentaires strict, les Lactobacilles homofermentaires - hétérofermentaires facultatif, et les mélanges desdits Lactobacilles.

Le levain suivant l'invention peut par exemple comporter des bactéries lactiques homofermentaires bio-transformatrices d'acide lactique choisies dans le groupe comprenant les Lactobacilles, les Carnobacilles, les Lactocoques, les Streptocoques, les Pediocoques, et les combinaisons desdites bactéries. Bien entendu, les bactéries lactiques homofermentaires bio-transformatrices d'acide lactique sélectionnées doivent être non pathogènes.

Le levain suivant l'invention peut par exemple comporter des bactéries lactiques homofermentaires bio-transformatrices d'acide lactique appartenant à une souche choisie dans le groupe comprenant les espèces Pediococcus *acidilactici*, *Streptococcus lactis* et *thermophilus, Lactobacillus bulgaricus, lactis, helveticus*, *salivarius, curvatus, sake* et *pentosus, delbrueckii, farciminis, acidophilus, plantarum, casei* et *rhamnosus* et les combinaisons desdites espèces. Les espèces particulièrement préférées sont les *Streptococcus thermophilus* et les *Lactobacillus delbrueckii, farciminis, acidophilus, plantarum*, *casei* et *rhamnosus.* Un exemple d'une telle souche est la souche Lp 652 de *Lactobacillus plantarum*, déposée par Lesaffre International - 147 Rue Gabriel Péri - 59700 MARCQ EN BAROEUL - France, le 16 juillet 2003 suivant le Traité de Budapest à la CNCM (Collection Nationale de Cultures de Microorganismes), Institut Pasteur, 25, Rue du Docteur Roux, F-75724 Paris (France) sous le numéro d'enregistrement CNCM I-3069.

Le levain suivant l'invention peut également comprendre des levures. Dans ce cas, le levain panaire comprend typiquement au moins cent mille (10⁵), de préférence au moins 1 million (10⁶) et encore de préférence au moins 5 millions (5x10⁶) d'UFC de levures. Les levures présentes dans un levain suivant l'invention sont typiquement des levures appartenant à des espèces de levure couramment présentes dans la biomasse de levains panaires. Le levain suivant l'invention peut notamment comprendre des UFC de levures choisies dans le groupe des espèces *Saccharomyces*, *Candida* et les combinaisons desdites levures, et en particulier des *Saccharomyces* cerevisiae et ses variétés diverses.

Le levain suivant l'invention peut par exemple comporter des levures appartenant à une souche choisie dans le groupe comprenant les *Saccharomyces cerevisiae, Saccharomyces exiguus, Saccharomyces dairensis, Saccharomyces turbidans, Torula delbrueckii*, *Torula* ou *Candida holmii*, *Candida colliculosa, Candida tropicalis, Candide krusei, Candide milleri, Candida boidinii, Candida* robusta, *Pichia saitoi* et les combinaisons desdites levures.

Le levain suivant l'invention peut également comporter une préparation enzymatique. Cette préparation enzymatique comprend typiquement une ou plusieurs des enzymes suivants : α-amylase, β-amylase, amyloglucosidase, pentosanase et xylanase et notamment une ou des amylases fongiques.

Les farines de céréale non maltée et en particulier les farines de céréale maltée sont des sources d'amylase. Toutefois, s'il y a un déficit d'amylase dans le levain, celui-ci peut être complété en ajoutant de la farine de céréale maltée (telle qu'une farine de froment malté) et/ou par l'incorporation dans le levain d'une préparation enzymatique contenant de l'amylase, comme par exemple de l'amylase fongique. Cette préparation enzymatique peut également présenter des activités enzymatiques autres qu'une activité d'amylase.

Dans le présent contexte, le terme « préparation enzymatique » concerne des suppléments d'enzyme, incorporés dans le levain, et ne couvre pas la farine de céréale maltée et/ou non maltée en tant que telle.

Un levain suivant l'invention peut avantageusement comprendre en tant que farine de céréale non maltée une farine de seigle non malté. Un levain panaire suivant l'invention peut ainsi comprendre de la farine de seigle non malté et de la farine de céréale maltée, comme notamment de la farine de froment malté.

Le levain suivant l'invention peut selon sa teneur en matières sèches se présenter sous forme liquide ou sous forme pâteuse. Le levain suivant l'invention peut notamment de manière utile avoir une teneur en matières sèches entre 12 et 50% en masse, de préférence entre 13 et 35% en masse, et encore de préférence entre 15 et 20% en masse. Suivant une forme d'exécution, le levain suivant l'invention a une teneur en matières sèches entre 15 et 35% en masse ou encore entre 13 et 20% en masse.

Quand le levain panaire suivant l'invention est liquide, il contient avantageusement un additif alimentaire choisi dans le groupe des épaississants et stabilisants alimentaires.

Le levain panaire suivant l'invention permet de combiner les avantages suivants :
- le levain panaire est prêt à l'emploi, c'est-à-dire qu'il est prêt à être incorporé dans une pâte boulangère comme agent de fermentation ;
- le levain permet au boulanger d'utiliser, lors de chaque panification, un levain ayant des caractéristiques en substance identiques,
- le levain peut être fabriqué industriellement avec obtention de manière régulière d'un QF recherché particulier.

L'invention permet notamment de réaliser des levains panaires prêt à l'emploi avec des QF faibles contenant majoritairement des bactéries lactiques homofermentaires, qui sont généralement plus actives que les bactéries hétérofermentaires, alors que traditionnellement les levains avec des QF faibles sont obtenus avec majoritairement des bactéries hétérofermentaires strict. L'utilisation de ces bactéries homofermentaires généralement très acidifiantes permet aussi au boulanger de raccourcir le temps de fermentation de sa pâte finale.

L'invention permet également de réaliser des levains panaires prêt à l'emploi qui conservent leurs propriétés et notamment une flore présentant les valeurs des UFC définies ci-dessus, pendant au moins un mois s'ils sont stockés à une température égale ou inférieure à 8°C.

Parmi les pains au levain, ceux dont l'agent de fermentation est essentiellement un levain et dont la mie présente un pH ≤ 4,3, de préférence ≤ 4,2, une teneur en acide acétique d'au moins 900 ppm en poids et de préférence une teneur en acide lactique d'au moins 4000 ppm en poids sont particulièrement recherchés. De tels pains au levain sont notamment décrits dans le décret français N° 93-1074, dit « Décret Pain ».

L'agent de fermentation est essentiellement un levain quand la dose de levure de panification ajoutée en plus du levain est égale ou inférieure à 0,2% en poids (exprimée en quantité équivalente de levure fraîche ou pressée à 32% en poids de matières sèches) par rapport à la farine mise en oeuvre à l'exclusion de la farine apportée par le levain. Ceci inclut évidemment également le cas où aucune levure de panification n'est ajoutée en plus du levain. Dans le cas où une dose de levure de panification est ajoutée en plus du levain, ladite levure de panification peut être ajoutée sous différentes formes ayant des teneurs en matières sèches, et donc de cellules de levure, variables, comme par exemple, de la levure sèche, de la levure pressée ou émiettée et de la levure liquide. Une levure pressée présente typiquement une teneur en matières sèches de 27 à 35% en poids.

Dans ce qui suit, sauf indication contraire, la dose de levure de panification ajoutée est systématiquement exprimée en termes de quantité équivalente de levure fraîche ou pressée à 32% en poids de matières sèches.

Un avantage important de la présente invention est qu'elle couvre des levains panaires permettant d'obtenir un pain au levain, dont la mie est caractérisée en ce qu'elle présente un pH ≤ 4,3, de préférence ≤ 4,2, une teneur en acide acétique d'au moins 900 ppm en poids et de préférence une teneur en acide lactique d'au moins 4000 ppm en poids, dans un schéma de panification court et en particulier dans un schéma de panification ayant un temps de fermentation compris entre le début du pétrissage et le début de la cuisson de moins de 4 heures 30, par exemple d'environ 4 heures, et ceci notamment avec un agent de fermentation qui est essentiellement ce levain.

De manière générale, si l'agent de fermentation est essentiellement le levain suivant l'invention, l'obtention d'un pain au levain demandera au moins 3 heures 30 de fermentation comprises entre le début du pétrissage et le début de la cuisson, de préférence au moins 3 heures 45.

De manière générale, l'obtention d'un pain selon l'invention demandera au moins 2 heures 30 de fermentation, de préférence au moins 3 heures.
La présente invention concerne aussi des souches de bactérie lactique homofermentaire bio-transformatrice d'acide lactique appropriées pour le levain panaire suivant l'invention. Ces souches peuvent être des souches du commerce ou de préférence par exemple la souche Lp 652 de *Lactobacillus plantarum*, déposée le 16 juillet 2003 à la CNCM sous le numéro d'enregistrement CNCM I-3069, souche qui s'est avérée intéressante pour le levain suivant l'invention et sa fabrication.

La présente invention concerne également des procédés permettant la fabrication d'un levain panaire suivant l'invention.

L'invention concerne ainsi des procédés pour la fabrication de levains panaires suivant l'invention dans lesquels on met en oeuvre des bactéries lactiques homofermentaires spécifiquement sélectionnées pour leur capacité à produire de l'acide acétique en consommant de l'acide lactique en carence de sucres fermentescibles et éventuellement en présence d'un accepteur d'électrons. Lesdites bactéries lactiques homofermentaires bio-transformatrices d'acide lactique sont mises en oeuvre, d'une part, pour la formation d'acide lactique par fermentation de sucres fermentescibles et, d'autre part, pour la production d'acide acétique à partir de l'acide lactique en carence substantielle de sucres fermentescibles.

Selon une forme d'exécution, l'invention concerne un procédé pour la fabrication d'un levain panaire prêt à l'emploi suivant l'invention, ledit procédé comprenant :
- la sélection de microorganismes ;
- la préparation d'un milieu de culture à base de farine ;
- l'ensemencement du milieu de culture ;
- une première fermentation du milieu de culture, et
- une deuxième fermentation du milieu de culture.

Suivant ce procédé de fabrication, on fait une sélection de microorganismes ; cette sélection contenant des bactéries lactiques, et notamment des bactéries lactiques homofermentaires bio-transformatrices d'acide lactique. Ladite sélection peut consister uniquement en une ou plusieurs bactéries lactiques homofermentaires et en particulier en une ou plusieurs bactéries lactiques homofermentaires bio-transformatrices d'acide lactique. Ladite sélection peut également comprendre d'autres microorganismes, tels que, par exemple, une ou plusieurs levures et/ou une ou plusieurs souches de bactéries lactiques hétérofermentaires.

Suivant ce procédé, on prépare un milieu de culture à base de farine, ce milieu contenant au moins une farine de céréale et de l'eau. Ledit milieu de culture à base de farine peut, le cas échéant, également comprendre d'autres ingrédients, et notamment des ingrédients susceptibles de promouvoir la croissance microbienne comme notamment l'autolysat de levure.

Le milieu de culture à base de farine ainsi préparé est ensemencé avec la sélection de microorganismes.

Suivant ce procédé, on réalise une première fermentation du milieu de culture à base de farine au moyen de cette sélection de microorganismes. Pendant cette première fermentation du milieu de culture, les bactéries lactiques homofermentaires de la sélection produisent de l'acide lactique en consommant des sucres fermentescibles présents dans le milieu de culture. On laisse continuer cette première fermentation du milieu de culture jusqu'à épuisement substantiel des sucres fermentescibles par les microorganismes de la sélection.

En pratique, l'homme du métier considère qu'il y a carence substantielle, absence substantielle ou épuisement substantiel de sucres fermentescibles quand la teneur en sucres fermentescibles dans le milieu est et reste inférieure à 2g/kg, de préférence inférieure à 1g/kg.

Après la première fermentation du milieu de culture, on réalise une deuxième fermentation de ce milieu de culture par les microorganismes de la sélection en carence substantielle de sucres fermentescibles. Pendant cette deuxième fermentation, et grâce à la sélection spécifique des microorganismes, il y a consommation d'acide lactique et production d'acide acétique (ci-après désigné par le terme « consommation/production d'acides») par les bactéries lactiques homofermentaires bio-transformatrices d'acide lactique. La deuxième fermentation s'effectue éventuellement en présence d'un accepteur d'électrons. Cette deuxième fermentation du milieu de culture est continuée jusqu'à obtention du QF recherché dans le milieu de culture à base de farine fermenté.

Le procédé de fabrication décrit ci-dessus est conduit de manière à ce qu'on obtienne un levain panaire (milieu de culture à base de farine fermenté) prêt à l'emploi suivant l'invention dont les différentes formes de réalisation ont été décrites ci-dessus.

Il est à noter que, si à la fin de la première fermentation le milieu de culture contient un accepteur d'électrons approprié ou si la deuxième fermentation s'effectue en l'absence d'un accepteur d'électrons dans le milieu, aucune intervention n'est nécessaire pour le passage de la première à la deuxième fermentation. En pratique, il suffit dans ce cas de continuer la fermentation du milieu de culture à base de farine par les microorganismes de la sélection au-delà de l'épuisement substantiel par ces microorganismes des sucres fermentescibles du milieu de culture, de manière à ce que cette fermentation continue en carence substantielle de sucres fermentescibles. Dans les autres cas, il est évidemment nécessaire d'ajouter un accepteur d'électrons au milieu de culture avant la deuxième fermentation.

Dans le procédé de fabrication suivant l'invention, l'accepteur d'électrons peut être choisi notamment en fonction de la nature des bactéries lactiques bio-transformatrices d'acide lactique de la sélection. De manière utile, l'accepteur d'électrons est choisi dans le groupe comprenant : l'oxygène, le citrate, le fructose, le glycérol et les combinaisons desdits éléments. Quand l'accepteur d'électrons est, ou comprend, de l'oxygène, la deuxième fermentation est effectuée en aérobiose (partielle ou non).

Comme mentionné ci-dessus, le QF est un facteur important pour l'obtention de la flaveur typique appréciée de pain au levain, et le fabricant de levains continuera donc la deuxième fermentation ci-dessus jusqu'à obtention d'un QF qui donne un pain au levain ayant une flaveur recherchée par le consommateur.

Le fabricant de levain peut ainsi faire varier le QF du levain produit en variant la durée de la deuxième fermentation du milieu de culture.

Selon une variante des procédés de fabrication suivant l'invention, on réalise la consommation/production d'acides en pré-culture. La pré-culture ainsi obtenue est ensuite utilisée, éventuellement en combinaison avec des microorganismes de la sélection qui n'ont pas été utilisés dans la pré-culture, pour la fermentation d'un milieu de culture dit « milieu de culture à base de farine ».

Suivant cette variante, on fait une sélection de microorganismes, qui contient des bactéries lactiques y compris des bactéries lactiques homofermentaires, comme déjà décrit ci-dessus.

On prépare un premier milieu de culture pour bactéries lactiques contenant de l'eau et les éléments nécessaires pour la croissance de bactéries lactiques, tels que des sucres fermentescibles.

Ce premier milieu de culture est ensemencé de bactéries lactiques homofermentaires bio-transformatrices d'acide lactique de la sélection.

On effectue une première fermentation du premier milieu de culture avec ces bactéries lactiques homofermentaires bio-transformatrices d'acide lactique jusqu'à épuisement substantiel des sucres fermentescibles. Pendant cette première fermentation du premier milieu de culture, ces bactéries lactiques homofermentaires consomment des sucres fermentescibles présents dans le premier milieu et produisent de l'acide lactique.

Après cette première fermentation, on réalise une deuxième fermentation du premier milieu de culture avec ces bactéries lactiques susmentionnées en carence substantielle de sucres fermentescibles, deuxième fermentation pendant laquelle ces bactéries lactiques homofermentaires produisent de l'acide acétique en consommant de l'acide lactique. La deuxième fermentation du premier milieu de culture est éventuellement effectuée en présence d'un accepteur d'électrons, comme déjà décrit ci-dessus. La deuxième fermentation du premier milieu de culture est poursuivie jusqu'à obtention d'un QF intermédiaire recherché dans le premier milieu de culture. De cette manière, on obtient une pré-culture de bactéries lactiques homofermentaires bio-transformatrices d'acide lactique (premier milieu de culture fermenté).

Selon cette variante du procédé de fabrication suivant l'invention, on prépare également un deuxième milieu de culture dit « milieu de culture à base de farine », ledit deuxième milieu de culture contenant au moins une farine de céréale et de l'eau.

Ce milieu de culture à base de farine est ensemencé avec les microorganismes de la sélection, d'une part, par l'incorporation de la première culture en deux étapes définies ci-dessus, appelée « pré-culture » dans ce milieu de culture, et d'autre part, en ensemençant ce milieu de culture avec les microorganismes de la sélection qui, le cas échéant, n'ont pas servi pour la préparation de la pré-culture.

On obtient un milieu de culture à base de farine fermenté par une fermentation de ce milieu de culture à base de farine au moyen de la sélection de microorganismes.

Cette variante du procédé de fabrication suivant l'invention est évidemment également conduite de manière à ce qu'on obtienne un levain panaire (milieu de culture à base de farine fermenté) prêt à l'emploi suivant l'invention tel que décrit ci-dessus.

Dans le procédé de fabrication suivant cette variante, il est possible d'arrêter la fermentation du milieu de culture à base de farine dès épuisement substantiel des sucres fermentescibles présents dans ce milieu. Il est également possible, dans le procédé suivant la variante, de continuer la fermentation du milieu de culture à base de farine au-delà de l'épuisement substantiel des sucres fermentescibles dans ce milieu, et de réaliser ainsi à nouveau une fermentation en plusieurs étapes :
- une première fermentation jusqu'à épuisement substantiel des sucres fermentescibles par les microorganismes de la sélection, et
- une deuxième fermentation en carence substantielle de sucres fermentescibles par les microorganismes de la sélection.

Il est à noter que dans le procédé selon la variante, le premier milieu de culture ne contient pas nécessairement, mais peut contenir de la ou des farines de céréale.

Le procédé de fabrication suivant l'invention, selon la première forme d'exécution ou selon sa variante d'exécution, permet donc au fabricant de levains de fabriquer de manière reproductible des levains panaires prêts à l'emploi, dont le fabricant peut choisir le QF sans ajout d'acides acétique ou lactique exogènes.

De préférence, tout l'acide lactique et tout l'acide acétique présents dans le levain ont été produits par les microorganismes de la sélection, ce qui permet d'obtenir des levains et des pains au levain dits « naturels ».

Dans la première forme d'exécution et la variante des procédés de fabrication suivant l'invention, l'ensemencement du milieu de culture dit « milieu de culture à base de farine » peut être effectué à un seul moment ou peut être effectué de manière décalée dans le temps. L'ensemencement du milieu de culture à base de farine de manière décalée dans le temps peut en particulier s'avérer avantageux dans le cas où la sélection de microorganismes comporte des microorganismes appartenant à des espèces ou souches différentes. Il est ainsi possible d'ensemencer le milieu de culture à base de farine avec des microorganismes différents à des moments d'ensemencement décalés dans le temps.

Les procédés de fabrication suivant l'invention peuvent également comprendre une ou plusieurs étapes de multiplication, dans laquelle ou dans lesquelles un ou plusieurs microorganismes de la sélection sont multipliés avant leur utilisation pour l'ensemencement d'un milieu de culture.

Pour une conservation prolongée du levain panaire obtenu, ledit levain panaire est refroidi et stocké à une température égale ou inférieure à 8°C, de préférence égale ou inférieure à 4°C.

Il est évident que l'ensemble des remarques données ci-dessus par rapport au levain suivant l'invention, et notamment en ce qui concerne les propriétés et la composition des différentes formes de réalisation dudit levain, la nature de la sélection de microorganismes, et notamment des bactéries lactiques homofermentaires et des levures éventuellement présentes, la nature de la farine de céréale et la présence d'autres ingrédients telle qu'une préparation enzymatique contenant de l'amylase, s'appliquent également à la première forme d'exécution et à la variante des procédés de fabrication suivant l'invention.

En ce qui concerne la présence d'une préparation enzymatique contenant de l'amylase dans le milieu de culture à base de farine, il est à noter ce qui suit.

La farine de céréale contient de l'amidon endommagé lors de la mouture qui est dégradable en sucres fermentescibles par les enzymes de la farine ou par de l'amylase. Les grains d'amidon non endommagés ou intacts ne sont, en principe, pas dégradables par lesdites enzymes.

Dans les procédés de préparation suivant l'invention, il est particulièrement souhaitable que la teneur en sucres fermentescibles dans le milieu de culture à base de farine fermenté soit aussi basse que possible, et que la teneur en sucres fermentescibles du levain panaire prêt à l'emploi ainsi obtenu est et reste inférieure à 5g/kg, de préférence inférieure à 3g/kg, et encore de préférence inférieure à 1g/kg pendant la conservation du levain.

Il est donc désiré qu'au cours des procédés de fabrication, l'amidon endommagé soit autant que possible dégradé en sucres fermentescibles.

On veille à ce que le milieu à base de farine et ensemencé avec les microorganismes contienne assez d'amylase, le cas échéant, en ajoutant une préparation enzymatique contenant de l'amylase.

On peut également utiliser, dans la préparation du levain suivant l'invention, des microorganismes, comme certaines bactéries lactiques, qui produisent des enzymes et notamment de l'amylases.

L'invention concerne aussi les levains panaires susceptibles d'être obtenus par, ou obtenus par les procédés de fabrication suivant l'invention.

L'invention concerne également l'utilisation d'un levain suivant l'invention comme agent de fermentation dans la préparation d'une pâte au levain pour produit de boulangerie, ainsi que dans la préparation d'un produit de boulangerie cuit. Ledit produit de boulangerie cuit peut être tout produit de boulangerie au levain cuit, tel que par exemple du type pain, brioche ou viennoiserie.

L'invention concerne donc un procédé de préparation de pâte pour produit de boulangerie comprenant l'ajout d'un levain suivant l'invention aux autres ingrédients de la pâte, ainsi qu'un procédé de préparation de produit de boulangerie cuit comprenant la préparation d'une pâte en ajoutant un levain suivant l'invention aux autres ingrédients de la pâte et la cuisson au four de la pâte ainsi obtenue.

Le levain panaire prêt à l'emploi peut en particulier être utilisé dans un schéma direct de panification comme défini ci-dessus. Ledit levain peut ainsi être utilisé dans un schéma direct de panification comprenant une seule étape de pétrissage et une étape de cuisson, et une durée entre le début du pétrissage et de la cuisson correspondant à la fermentation inférieure ou égale à 6 heures, et encore de préférence inférieure ou égale à 4 heures.

De manière avantageuse, le levain suivant l'invention est ajouté aux autres ingrédients de la pâte comme agent de fermentation. Ledit levain peut être le seul ou le principal agent de fermentation présent dans la pâte. Le levain suivant l'invention peut également être présent dans la pâte en combinaison avec un autre agent de fermentation, comme notamment de la levure de boulangerie. Dans ce cas, la quantité de levure de boulangerie ajoutée (exprimée en quantité équivalente de levure fraîche ou pressée à 30% de matières sèches) est de préférence égale ou inférieure à 1%, encore de préférence égale ou inférieure à 0,6%, et plus de préférence encore égale ou inférieure à 0,2% en masse par rapport à la farine mise en oeuvre (à l'exclusion de la farine présente dans le levain suivant l'invention).

Quand il est fait référence au « Décret pain » (voir ci-après exemple 3), cette dose est égale ou inférieure à 0,2% (exprimée en quantité équivalente de levure fraîche ou pressée à 32 % de matières sèches).

L'invention concerne ainsi un procédé de panification comprenant :
- la préparation d'une pâte boulangère comprenant un levain suivant l'invention,
- la fermentation de la pâte boulangère, et
- la cuisson de la pâte boulangère fermentée,
et en particulier un tel procédé de panification dans lequel la fermentation de la pâte boulangère à une durée inférieure ou égale à 6 heures, de préférence inférieure ou égale à 5 heures et encore de préférence inférieure ou égale à 4 heures.

L'invention concerne également les pâtes pour produit de boulangerie comprenant un levain panaire suivant l'invention et les produits de boulangerie cuits obtenus par un procédé de préparation suivant l'invention.

L'invention concerne en particulier des pâtes pour produit de boulangerie comprenant un levain panaire suivant l'invention comme seul apport volontaire de bactéries lactiques et contenant de ce fait des bactéries lactiques dont au moins 60%, de préférence au moins 75%, et encore de préférence au moins 95% sont des bactéries lactiques homofermentaires capables de produire de l'acide acétique en consommant de l'acide lactique en carence substantielle de sucres fermentescibles, ledit levain panaire pouvant être un levain panaire selon l'une quelconque des formes d'exécution décrites ci-dessus. Dans le cas d'un levain panaire selon l'invention contenant non seulement des bactéries lactiques, mais également de la levure, la pâte peut contenir le levain suivant l'invention comme seul apport de microorganismes.

La présente invention concerne également l'utilisation d'un levain panaire suivant l'invention comme agent de conservation pour produit de boulangerie cuit. Il a en effet été constaté que l'utilisation d'un levain panaire selon l'invention comme agent de conservation pour produit de boulangerie cuit, même si les microorganismes du levain ont été partiellement ou totalement désactivés, permet de prolonger la durée de conservation du produit cuit. L'effet dudit levain panaire, dont les microorganismes ont éventuellement partiellement ou totalement été désactivés, en tant qu'agent de conservation pour produit cuit se manifeste, par rapport à un produit cuit préparé sans utilisation de ce levain, en particulier d'une part par un retardement du développement de moisissures dans et sur le produit cuit et d'autre part par le fait que le produit cuit conserve plus longtemps son aspect frais au sens organoleptique.

Ainsi, l'invention concerne un procédé pour prolonger la durée de conservation d'un produit de boulangerie cuit, ledit procédé comprenant :
- optionnellement la désactivation partielle ou totale des microorganismes d'un levain selon l'invention,
- la préparation d'une pâte pour produit de boulangerie en y incorporant ledit levain selon l'invention éventuellement désactivé, et
- la cuisson au four de ladite pâte de manière à obtenir un produit de boulangerie cuit à durée de conservation prolongée.
La pâte est de préférence une pâte contenant de la levure de panification qu'on soumet à une étape de fermentation par cette levure avant sa cuisson au four. Le produit cuit peut, par exemple, être de type pain, brioche ou viennoiserie.

Le dénombrement des UFC de bactéries lactiques est décrit dans la norme française NF ISO 15214 de septembre 1998. Suivant le protocole appliqué dans le présent contexte, on ajoute à la composition du milieu MRS une quantité efficace de l'antifongique cycloheximide, afin d'éviter le développement de levures qui biaiserait ou fausserait les résultats.

Le dénombrement des levures est décrit dans la norme internationale ISO 7954 de 1987. Le protocole appliqué dans le présent contexte utilise une quantité efficace de bactéricide non toxique pour les levures comme le chloramphénicol (voir ISO 7954, paragraphe 5.3), afin d'éviter le développement de bactéries qui biaiserait ou fausserait les résultats. Le protocole appliqué dans le présent contexte se distingue toutefois de la méthode décrite dans la norme en ce que la température est de 30°C.

### EXEMPLES

### EXEMPLE 1: Préparation d'un levain panaire prêt à l'emploi suivant l'invention

### 1) Préparation

### a) Sélection de microorganismes

La bactérie lactique homofermentaire capable de consommer de l'acide lactique avec production d'acide acétique choisie est le *Lactobacillus plantarum* commercialisé sous la dénomination « Texel Dried L115 » par la société Rhodia Food ZA De Buxières, BP 10 - 86220 Dange - Saint Romain (France)

### b) Préparation du milieu de culture à base de farine

On mélange dans un fermenteur (fermenteur Applikon® de 7 litres muni de 2 séries de pales Rushton®, d'une sonde de pH, d'une sonde de pO₂ et aéré par aérateur sous forme de tube perforé, commandé par un module Bio-Controler ADI® 1030, d'un régulateur de vitesse ADI® 1032 et d'une thermo-régulation ADI® 1018 du même constructeur) 150g de farine de seigle type 170 en mouture fine, 15g de farine de froment malté et 835g d'eau.

### c) Ensemencement

On ajoute à ce milieu de culture à base de farine 1g de lyophilisat de la bactérie *Lactobacillus plantarum.*

### d) Première fermentation

On laisse fermenter le mélange à 30°C pendant 24h sous agitation modérée (150 RPM) sans aération.

Au bout de 24h, le pH est mis en régulation à une valeur consigne de 4,8.

Cette régulation de pH n'est pas indispensable mais permet d'accélérer la consommation des sucres fermentescibles et d'éviter le développement d'une flore indésirable éventuelle.

On laisse de nouveau fermenter 24h à 30°C.

On vérifie alors l'absence de sucres directement fermentescibles dans le levain, par dosage HPLC. (chaîne HPLC Shimadzu® équipée d'une colonne HPX 87 H de Biorad® et utilisant un détecteur par réfractométrie et/ou un autre détecteur par absorbance UV).

### e) Deuxième fermentation

On aère le milieu de culture par un effet combiné d'une forte agitation (400 RPM) et d'une injection d'air au fond du fermenteur afin de maintenir la pO₂ autour de 20%.

On laisse fermenter le milieu de culture sous aération pendant 24 à 48 heures.

### f) Conservation

On refroidit le levain panaire ainsi obtenu à 4°C et on le conserve à cette température sans agitation.

### 2) Résultats

A différents moments au cours de la préparation du levain, des prélèvements de milieu de culture à base de farine sont effectués, ces prélèvements sont centrifugés, dilués au 1/10^{ième} dans de l'eau distillée additionnée d'acide sulfurique 5mM, filtrés sur filtre à porosité de 0,45µm et injectés en HPLC (voir référence plus haut). Les résultats analytiques sont consignés dans le tableau 1.

Le milieu à la fin de la première fermentation est épuisé en sucres fermentescibles, tous les sucres simples étant consommés par les microorganismes.

Ces données permettent de calculer l'évolution du quotient fermentaire (QF) au cours de ladite deuxième fermentation. Ces résultats sont consignés dans le tableau 2.

On observe clairement la transformation mole à mole de l'acide lactique en acide acétique en fonction du temps. Il suffit d'arrêter l'aération au QF désiré pour arrêter la production d'acide acétique à partir d'acide lactique par les bactéries lactiques de la sélection et pour stabiliser la composition du levain panaire prêt à l'emploi obtenu.

### EXEMPLE 2: Préparation d'un pain au levain suivant l'invention

On compare par un test de dégustation les pains préparés suivants :
- Un pain au levain fabriqué avec un levain tout point traditionnel élaboré sur seigle et apporté à raison de 30 kg de levain tout point pour 100kg de farine (pain 1), (contrairement aux autres pains de l'exemple et afin que ce pain possède toutes les caractéristiques d'un pain au levain traditionnel, un schéma de panification sur 7 heures a été employé pour le pain 1)
- Un pain au levain obtenu avec le levain panaire prêt à l'emploi de l'exemple 1 obtenu avec une deuxième fermentation de 24 heures, utilisé à raison de 15 kg de levain pour 100kg de farine (pain 2)
- Un pain au levain réalisé avec un levain panaire prêt à l'emploi suivant l'invention ayant une teneur en acide lactique de 28 g/kg et une teneur en acide acétique de 12g/kg (pain 3)
- Un pain fabriqué avec un arôme levain, c'est-à-dire un levain sec déshydraté utilisé conformément à sa fiche technique à 3 kg pour 100kg de farine (pain 4)

Les proportions de levain par rapport à la farine pour les pains correspondent aux doses d'emploi habituellement préconisées.

Les formules des pâtes correspondantes (exprimées en partie en masse pour 100 kg de farine, pourcentage du boulanger) sont données dans le tableau 3.

Le schéma de fabrication avec 3 heures 40 de fermentation entre la fin du pétrissage et le début de la cuisson, soit 3h 50 si on compte le pétrissage y compris le frasage dans la fermentation, est le suivant (les variantes pour le pain 1 sont fournies entre parenthèses) :

| | |
|---|---|
| Fraisage : | 8 minutes en 1^{ère} vitesse sur pétrin à spirale marque VMI^{®} |
| Pétrissage : | 2 minutes en 2^{ème} vitesse sur pétrin à spirale marque VMI^{®} |
| Pointage : | 1h40 (pain 1 : 3 heures) |
| Pesage/boulage : | poids pâton 500g |
| Détente : | 0h50 |
| Façonnage manuel : | en bâtard |
| Apprêt : | 1h10 (pain 1 : 3 heures) |
| Cuisson : | 0h45 à 225°C avec buée |

Les teneurs en acide lactique et en acide acétique ont été mesurées dans la mie des pains cuits préparés avec les différents levains et sont données dans le tableau 4.

Les pains ont également été soumis à un test de dégustation par un ensemble d'experts, les résultats sont donnés dans le tableau 5.

La conclusion unanime du jury de dégustation est que le levain liquide prêt à l'emploi suivant l'invention permet d'obtenir un pain au levain qui se compare favorablement à un pain au levain traditionnel.

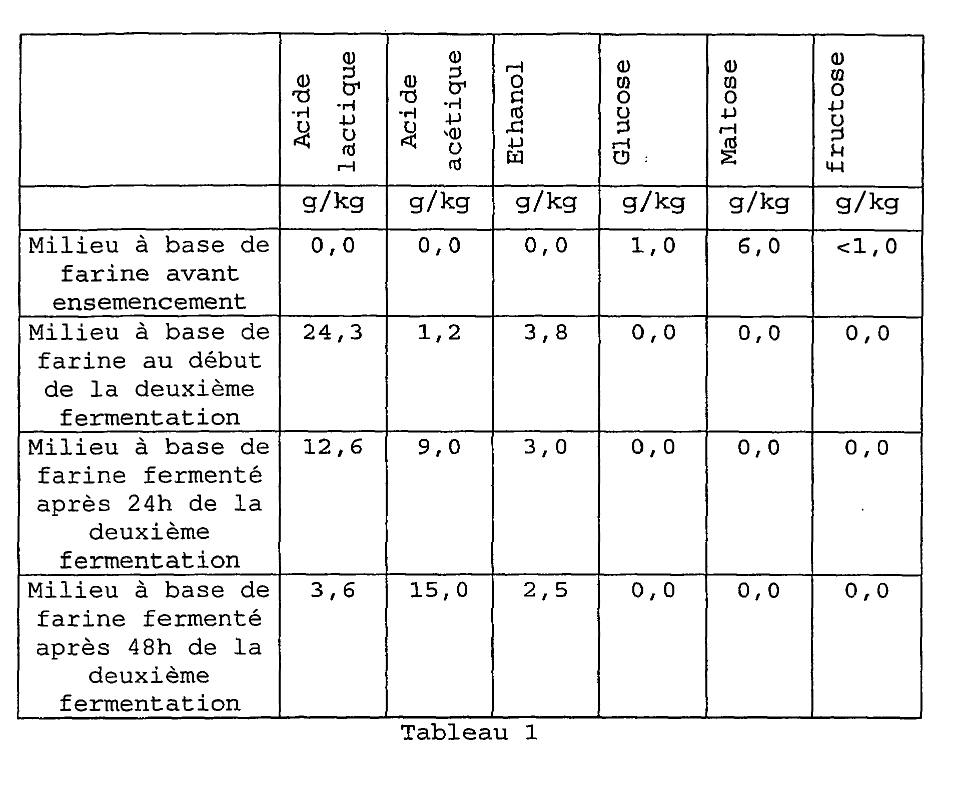

**Tableau 2**

| | Acide lactique | Acide acétique | Acide acétique + acide lactique | Quotient fermentaire |
|---|---|---|---|---|
| | mmol/kg | mmol/kg | mmol/kg | mmol/kg |
| Milieu à base de farine au début de la deuxième fermentation | 270 | 20 | 290 | 13,5 |
| Milieu à base de farine fermenté après 24h de la deuxième fermentation | 140 | 150 | 290 | 0,90 |
| Milieu à base de farine fermenté après 48h de la deuxième fermentation | 40 | 250 | 290 | 0,2 |

**Tableau 3**

| | Pain 1 | Pains 2 et 3 | Pain 4 |
|---|---|---|---|
| Farine de froment type 55 | 100 | 100 | 100 |
| Eau | 60 | 58 | 63 |
| Sel | 2,0 | 1,8 | 2, |
| Levure pressée (à 30% de matières sèches) | 0,2 | 0,6 | 1,0 |
| Levain liquide prêt à l'emploi | | 15 | |
| Levain traditionnel | 30 | | |
| Arôme levain | | | 3 |

**Tableau 4**

| | Pain 1 | Pain 2 | Pain 3 | Pain 4 |
|---|---|---|---|---|
| Acide lactique | 3700 ppm | 1800 ppm | 3300 ppm | 3600 ppm |
| Acide acétique | 900 ppm | 900 ppm | 1200 ppm | 150 ppm |

**Tableau 5**

| | Pain 1 | Pains 2 et 3 | Pain 4 |
|---|---|---|---|
| Type de levain | Levain traditionnel | Levain liquide suivant l'invention | arôme levain (levain sec inactif) |
| Aspect croûte | Bel aspect, croûte colorée sans excès | Bel aspect, coloration brun rouge un peu plus importante que sur le levain naturel | Pain plat, terne, manque de tenue et de fermentation |
| Aspect mie | Mie ouverte à très ouverte, couleur crème | Mie ouverte, couleur crème | Mie dense, couleur grise |
| Odeur croûte | Note acétique sans excès, sucre cuit, verte, rosée | Note acétique, sucre cuit, caramel (1) | Note brûlée, terre |
| Odeur mie | Légèrement acétique, sous bois, pain d'épice | Légèrement acétique, pain d'épice, miellée, boisée (1) | Note brûlée |
| Mâche | Elastique puis fondante | Elastique puis fondante | Tassée, collante |
| Goût | Légèrement aigrelet, amande, fruité, pain d'épice | Acétique sans excès, pain d'épice, fruité, noisette, grillé, acidulé (1) | Franche acidité, métallique, sans arômes |

| | | | |
|---|---|---|---|
| (1) arômes du pain 3 généralement perçus de manière plus prononcée que ceux du pain 2. | | | |

### EXEMPLE 3 : Préparation d'un « pain au levain », au sens du Décret Pain français, suivant l'invention

En France, l'utilisation de la dénomination « pain au levain » est réglementée par le Décret n°93-1074, dit « Décret Pain », du 13 septembre 1993, publié dans le J.O. du 14 septembre 1993, et modifié par le Décret n°97-917 du 1er octobre 1997, publié dans le J.O. du 8 octobre 1997. On réalise un « pain au levain » au sens dudit Décret Pain avec le levain panaire prêt à l'emploi de l'exemple 1 obtenu avec la souche Lp 652 déposée au CNCM sous le numéro CNCM I-3069 avec une deuxième fermentation de 24 heures. Ce levain panaire est utilisé à raison de 15kg de levain pour 100kg de farine.

La formule de la pâte correspondante (exprimée en partie en masse pour 100 kg de farine, c'est-à-dire en pourcentage du boulanger) est donnée dans le tableau 6.

La formule de la pâte répond aux exigences du Décret Pain pour l'obtention d'un « pain au levain » au sens du Décret Pain.

Le levain est notamment l'agent essentiel de la fermentation car la dose de levure de panification (exprimée à 32% de matières sèches) ne dépasse pas 0,2% en poids par rapport à la farine.

Le schéma de fabrication avec 4 heures de fermentation est le suivant :

| | |
|---|---|
| Frasage : | 3 minutes en 1^{ère} vitesse sur pétrin à spirale marque VMI^{®} |
| Pétrissage : | 10 minutes en 2^{ème} vitesse sur pétrin à spirale marque VMI^{®} |
| Pointage : | 3 heures en masse à 35°C |
| Pesage/boulage : | poids pâton 500g |
| Détente : | 0h10Façonnage manuel : en pavé |
| Apprêt : | 0h50 à 35°C |
| Cuisson : | 0h35 à 230°C avec buée |

Les teneurs en acide lactique et en acide acétique ainsi que le pH ont été mesurés dans la mie du pain cuit préparé avec le levain et sont donnés dans le tableau 7. Les valeurs de pH de mie (4,20) et de teneur en acide acétique (1300 ppm) répondent aux exigences du Décret Pain pour l'appellation « pain au levain ».

Le levain liquide prêt à l'emploi suivant l'invention permet donc d'obtenir, en seulement 4 heures entre la fin du pétrissage et le début de la cuisson, un « pain au levain » répondant aux critères de préparation et d'acidité fixés par le Décret Pain(ou encore en seulement 4 heures et 13 minutes entre le début du pétrissage y compris le frasage et le début de la cuisson).

Le pain a également été soumis à un test de dégustation par un ensemble d'experts, les résultats sont donnés dans le tableau 8.

**Tableau 6**

| | |
|---|---|
| Farine de froment type 55 | 100 |
| Eau | 60 |
| Sel | 2,0 |
| Levure pressée (à 32% de matières sèches) | 0,2 |
| Levain liquide prêt à l'emploi | 15 |

**Tableau 7**

| | |
|---|---|
| Acide lactique | 4550 ppm |
| Acide acétique | 1300 ppm |

**Tableau 8**

| | |
|---|---|
| Type de levain | Levain liquide suivant l'invention |
| Aspect croûte | Bel aspect, coloration brun rouge légèrement plus importante que sur un pain au levain naturel |
| Aspect mie | Mie ouverte à très ouverte, couleur crème |
| Odeur croûte | Note acétique, grillée, caramel, maltée |
| Odeur mie | acétique, boisée, acidulée, miellée |
| Mâche | Elastique puis fondante |
| Goût | Agréablement aigrelet, céréales fermentées, noisette, fruité, acidulé |

## Revendications

1. Levain panaire prêt à l'emploi :
• consistant en un milieu de culture à base de farine contenant au moins une farine de céréale et due l'eau, et étant ensemencé et fermenté par une sélection de microorganismes, la dite sélection comprenant des bactéries lactiques,
le dit levain panaire contenant :
• de l'acide acétique en une teneur d'au moins 7g/l et de préférence d'au moins 10 g/l et optionnellement également de l'acide lactique,
• au moins 10⁸ et de préférence au moins 10⁹ d'UFC de bactéries lactiques par gramme, dont au moins 60%, de préférence au moins 75%, et encore de préférence au moins 95% sont des bactéries lactiques homofermentaires capables de produire de l'acide acétique en consommant de l'acide lactique en carence substantielle de sucres fermentescibles ; le dit levain panaire prêt à l'emploi présentant les caractéristiques suivantes :
• un pH entre 3,8 et 4,5, de préférence entre 4,0 et 4, 3;
• a une teneur inférieure à 5g/kg, de préférence inférieure à 3g/kg, et encore de préférence inférieure à 1g/kg en sucres fermentescibles par les microcrganismes ; et
• un quotient fermentaire QF inférieur ou égal à 4,75 ; de préférence inférieur ou égal à 4,00 et encore de préférence inférieur ou égal à 3,00.

2. Levain planaire prêt à l'emploi suivant la revendication 1, **caractérisé en que** qu'il présente une teneur en matières sèches entre 12 et 50% en masse, de préférence entre 13 et 35% en masse, 1 et encore de préférence entre 15 et 20% en masse.

3. Levain panaire suivant l'une quelconque des revendications 1 et 2, **caractérisé en ce qu'**il contient des levures.

4. Levain panaire suivant la revendication 3, **caractérisé en ce qu'**il contient au moins 10⁵, de préférence au moins 10⁶ et encore de préférence au moins 5X10⁶ d'UFC de levures par gramme.

5. Levain panaire suivant l'une quelconque des revendications précédentes, 1 **caractérisé en ce qu'**il comprend en plus une préparation enzymatique contenant de l'amylase.

6. Levain panaire suivant l'une quelconque des revendications précédentes, **caractérisé par le fait qu'**il conserve ses propriétés fermentatives de la pâte, et en particulier sa flore vivante **caractérisée par** le nombre d'UFC au moins un mois s'il est conservé à une température égale ou inférieure à 8°C.

7. Levain panaire suivant l'une quelconque des revendications précédentes, **caractérisé par le fait qu'**il permet d'obtenir dans un schéma de panification ayant un temps de fermentation compris entre le début du pétrissage et le début de la cuisson de moins de 4 heures 30 un pain a levain dont l'agent de fermentation est essentiellement du levain et dont la mie est **caractérisée en ce qu'**elle présente un pH ≤ 4, 3, de préférence ≤ 4,2, une teneur en acide acétique d'au moins 900 ppm en poids et de préférence une teneur en acide lactique d'au moins 4000 ppm en poids.

8. Bactérie lactique homofermentaire bio-transformatrice d'acide lactique appartenant à la souche Lp 652 déposée le 16 juillet 2003 à la CNCM sous le numéro d'enregistrement CNCM I-3069.

9. Procédé pour la fabrication d'un levain planaire prêt à l'emploi suivant l'une quelconque des revendications 1 à 7, procédé dans lequel :
• on fait une sélection de microorganismes, cette sélection contenant des bactéries lactiques, y compris des bactéries lactiques homofermentaires capables de produire de l'acide acétique en consommant de l'acide lactique en carence substantielle de sucres fermentescibles ;
• on prépare un milieu de culture à base de farine, le dit milieu de culture contenant au moins une farine de céréale et de l'eau ;
• on ensemence le milieu de culture à base de farine avec la sélection de microorganismes ;
• on réalise une première fermentation du milieu de culture à base de farine au moyen de cette sélection de microorganismes jusqu'à épuisement substantiel des sucres fermentescibles par les microorganismes de la sélection ; et
• on réalise en carence substantielle de sucres fermentescibles une deuxième fermentation du dit milieu de culture à base de farine par les microorganismes de la sélection, cette deuxième fermentation étant continuée jusqu'à obtention d'un QF recherché dans le milieu de culture à base de farine.

10. Procédé pour la fabrication d'un levain panaire prêt à l'emploi suivant l'une quelconque des revendications 3 à 7, procédé dans lequel :
• on fait une sélection de microorganismes, cette sélection contenant des bactéries lactiques y compris des bactéries lactiques homofermentaires capables de produire ce l'acide acétique en consommant de l'acide lactique en carence substantielle de sucres fermentescibles ;
• on prépare un premier milieu de culture pour bactéries lactiques contenant de l'eau et les éléments nécessaires pour la croissance des bactéries lactiques,
• on ensemence ce premier milieu de culture avec les bactéries lactiques homofermentaires capables de produite de l'acide acétique en consommant de l'acide lactique de la sélection de microorganismes ;
• on réalise une première fermentation du premier milieu de culture avec ces bactéries lactiques homofermentaires jusqu'à épuisement substantiel des sucres fermentescibles ; et
• on réalise en carence substantielle de sucres fermentescibles une deuxième fermentaticn du premier milieu de culture avec ces bactéries lactiques homofermentaires capables de produire de l'acide acétique en consommant de l'acide lactique et on continue la deuxième fermentation du premier milieu de culture jusqu'à obtention d'un quotient fermentaire QF intermédiaire recherché dans le premier milieu de culture de manière à obtenir une pré-culture de bactéries lactiques homofermentaires ; et
• on prépare un deuxième milieu de culture à base de farine, ledit deuxième milieu de culture à base de farine contenant au moins une farine de céréale et de l'eau ;
• on ensemence le milieu de culture à base de farine avec les microorganismes de la sélection, d'une part, par l'incorporation de la pré-culture dans le deuxième milieu de culture et, d'autre part, le cas échéant, en ensemençant le milieu de culture à base de farine avec les microorganismes de la sélection qui n'ont pas servi pour la préparation de la pré-culture ;
• on réalise une fermentation du milieu de culture à base de farine au moyen de cette sélection de microorganismes.

11. Procédé de fabrication suivant l'une quelconque des revendications 9 et 10 dans lequel la deuxième fermentation est effectuée en présence d'un accepteur d'électrons.

12. Procédé de fabrication suivant la revendication 11 dans lequel l'accepteur d'électrons est choisi dans le groupe comprenant : l'oxygène, le citrate, le fructose, le glycérol et les combinaisons desdits éléments.

13. Procédé de fabrication suivant l'une quelconque des revendications 9 à 12, dans lequel en substance la totalité et de préférence la totalité de l'acide acétique présent dans le levain et de l'acide lactique éventuellement présent dans le levain est produite par les microorganismes de la sélection.

14. Procédé de fabrication suivant l'une quelconque des revendications 9 à 13, comprenant une étape de conservation à. une température égale ou inférieure à 8°C, de préférence inférieure à 4°C du levain panaire ainsi obtenu.

15. Levain panaire prêt à l'emploi susceptible d'être obtenu selon le procédé d'une des revendications 9 à 14

16. Utilisation d'un levain panaire prêt à l'emploi suivant l'une quelconque des revendications 1 à 7 et 15 dans la préparation d'une pâte au levain pour produits de boulangerie ou dans la préparation d'un produit de boulangerie cuit.

17. Utilisation suivant à revendication 15 d'un levain panaire prêt à l'emploi dans un schéma direct de panification comportant un apport de levure de panification égal ou inférieur à 1%, de préférence égal ou inférieur à 0,6% et encore de préférence égal ou inférieur à 0,2% en masse par rapport à la farine mise en oeuvre.

18. Utilisation suivant l'une des revendications 16 et 17 d'un levain panaire prêt à l'emploi dans un schéma direct de panification comprenant une seule étape de pétrissage et une étape de cuisson, et une durée entre le début du pétrissage et le début de la cuisson inférieure égale ou inférieure à 6 heures, de préférence égale ou inférieure à 4 heures.

19. Procédé de préparation d'une pâte fermentée pour produits de boulangerie ou d'un produit de boulangerie cuit, procédé comprenant : la préparation d'une pâte avec au moins les ingrédients suivants : de la farine, de l'eau et du levain panaire prêt à l'emploi suivant l'une quelconque des revendications 1 à 7 et 15, et la fermentation de la pâte ainsi préparée.

20. Pâte au levain pour produits de boulangerie comprenant un levain panaire suivant l'une quelconque des revendications 1 à 7 et 15.

21. Utilisation comme agent de conservation pour produit de boulangerie cuit d'un levain panaire suivant l'une quelconque des revendications 1 à 7 et 15, de préférence après désactivation partielle des microorganismes du levain, encore de préférence après désactivation totale des microorganismes du levain.

## Claims

1. Ready-to-use sourdough:
• consisting of a flour-based culture medium containing at least one cereal flour and water, and being seeded and fermented with a selection of microorganisms, said selection comprising lactic acid bacteria,
said sourdough containing:
• acetic acid in an amount of at least 7 g/l and preferably of at least 10 g/l and optionally also lactic acid,
• at least 10⁸ and preferably at least 10⁹ CFUs of lactic acid bacteria per gram, of which at least 60%, preferably at least 75% and preferably still at least 95% is homofermentative lactic acid bacteria capable of producing acetic acid by consuming lactic acid in the presence of a substantial deficiency of fermentable sugars;
said ready-to-use sourdough having the following characteristics:
• a pH between 3.8 and 4.5, preferably between 4.0 and 4.3;
• a content of less than 5 g/kg, preferably less than 3 g/kg, and preferably still less than 1 g/kg of sugars fermentable by the microorganisms; and
• a fermentation quotient FQ of less than or equal to 4.75; preferably less than or equal to 4.00 and preferably still less than or equal to 3.00.

2. Ready-to-use sourdough according to Claim 1, **characterized in that** it has a dry matter content of between 12 and 50% by mass, preferably between 13 and 35% by mass, and preferably still between 15 and 20% by mass.

3. Sourdough according to either of Claims 1 and 2, **characterized in that** it contains yeasts.

4. Sourdough according to Claim 3, **characterized in that** it contains at least 10⁵, preferably at least 10⁶ and preferably still at least 5 × 10⁶ CFUs of yeasts per gram.

5. Sourdough according to any one of the preceding claims, **characterized in that** it additionally comprises an enzymatic preparation containing amylase.

6. Sourdough according to any one of the preceding claims, **characterized in that** it preserves its dough fermenting properties, and in particular its live flora **characterized by** the number of FCUs at least one month if it is stored at a temperature equal to or less than 8°C.

7. Sourdough according to any one of the preceding claims, **characterized in that** it makes it possible to obtain, in a breadmaking process having a fermentation time between the start of kneading and the start of baking of less than 4 hours 30 minutes, a leavened bread whose fermentation agent is essentially sourdough and whose crumb is **characterized in that** it has a pH ≤ 4.3, preferably ≤ 4.2, an acetic acid content of at least 900 ppm by weight and preferably a lactic acid content of at least 4000 ppm by weight.

8. Homofermentative lactic acid bacterium which bioconverts lactic acid belonging to the Lp 652 strain deposited on July 16, 2003 at the CNCM under the registration number CNCM I-3069.

9. Method for the manufacture of a ready-to-use sourdough according to any one of Claims 1 to 7, in which method:
• a selection of microorganisms is carried out, this selection containing lactic acid bacteria, including homofermentative lactic acid bacteria capable of producing acetic acid by consuming lactic acid in the presence of a substantial deficiency of fermentable sugars;
• a flour-based culture medium is prepared, said culture medium containing at least one cereal flour and water;
• the flour-based culture medium is seeded with the selection of microorganisms;
• a first fermentation of the flour-based culture medium is carried out by means of this selection of microorganisms until there is substantial depletion of the fermentable sugars by the microorganisms of the selection; and
• a second fermentation of said flour-based culture medium is carried out in the presence of a substantial deficiency of fermentable sugars by the microorganisms of the selection, this second fermentation being continued until a desired FQ is obtained in the flour-based culture medium.

10. Method for the manufacture of a ready-to-use sourdough according to any one of Claims 1 to 7, in which method:
• a selection of microorganisms is carried out, this selection containing lactic acid bacteria, including homofermentative lactic acid bacteria capable of producing acetic acid by consuming lactic acid in the presence of a substantial deficiency of fermentable sugars;
• a first culture medium for lactic acid bacteria containing water and with the substances necessary for the growth of the lactic acid bacteria is prepared,
• this first culture medium is seeded with homofermentative lactic acid bacteria capable of producing acetic acid by consuming lactic acid of the selection of microorganisms;
• a first fermentation of the first culture medium is carried out with these homofermentative lactic acid bacteria until there is substantial depletion of the fermentable sugars; and
• a second fermentation of the first culture medium is carried out in the presence of a substantial deficiency of fermentable sugars with these homofermentative lactic acid bacteria capable of producing acetic acid by consuming lactic acid and the second fermentation of the first culture medium is continued until a desired intermediate fermentation quotient FQ is obtained in the first culture medium so as to obtain a preculture of homofermentative lactic acid bacteria; and
• a second flour-based culture medium is prepared, said second flour-based culture medium containing at least one cereal flour and water;
• the flour-based culture medium is seeded with the microorganisms of the selection, on the one hand, by incorporating the preculture into the second culture medium and, on the other hand, where appropriate, by seeding the flour-based culture medium with the microorganisms of the selection which have not served for the preparation of the preculture;
• a fermentation of the flour-based culture medium is carried out by means of this selection of microorganisms.

11. Method of manufacture according to either of Claims 9 and 10, in which the second fermentation is carried out in the presence of an electron acceptor.

12. Method of manufacture according to Claim 11, in which the electron acceptor is chosen from the group comprising: oxygen, citrate, fructose, glycerol and combinations of said substances.

13. Method of manufacture according to any one of Claims 9 to 12, in which in substance all and preferably all of the acetic acid present in the sourdough and lactic acid which may be present in the sourdough is produced by the microorganisms of the selection.

14. Method of manufacture according to any one of Claims 9 to 13, comprising a stage for the preservation, at a temperature equal to or less than 8°C, preferably less than 4°C, of the sourdough thus obtained.

15. Ready-to-use sourdough which can be obtained according to the method of one of Claims 9 to 14.

16. Use of a ready-to-use sourdough according to any one of Claims 1 to 7 and 15 in the preparation of a leavened dough for bakery products or in the preparation of a baked bakery product.

17. Use according to Claim 16 of a ready-to-use sourdough in a straight dough process comprising a supply of backer's yeast equal to or less than 1%, preferably equal to or less than 0.6% and preferably still equal to or less than 0.2% by mass relative to the flour used.

18. Use according to either of Claims 16 and 17, of a ready-to-use sourdough in a straight dough process comprising a single kneading stage and a baking stage, and a period between the start of kneading and the start of baking equal to or less than 6 hours, preferably equal to or less than 4 hours.

19. Method for preparing a fermented dough for bakery products or a baked bakery product, the method comprising: the preparation of a dough with at least the following ingredients: flour, water, ready-to-use sourdough according to any one of Claims 1 to 7 and 15, and the fermentation of the dough thus prepared.

20. Leavened dough for bakery products comprising a sourdough according to any one of Claims 1 to 7 and 15.

21. Use, as preserving agent for a baked bakery product, of a sourdough according to any one of Claims 1 to 7 and 15, preferably after partial deactivation of the microorganisms of the sourdough, preferably still after total deactivation of the microorganisms of the sourdough.

## Patentansprüche

1. Gebrauchsfertiger Brotsauerteig:
- bestehend aus einem Kulturmilieu auf der Basis von Mehl, das mindestens ein Getreidemehl und Wasser enthält, und mit einer Auswahl von Mikroorganismen beimpft und fermentiert ist, wobei die Auswahl Milchsäurebakterien umfasst,
wobei der Brotsauerteig enthält:
- Essigsäure in einem Gehalt von mindestens 7 g/l und vorzugsweise von mindestens 10 g/l und optional ebenfalls Milchsäure,
- mindestens 10⁸ und vorzugsweise mindestens 10⁹ ufc/g Milchsäurebakterien, von denen mindestens 60 %, vorzugsweise mindestens 75 % und weiterhin vorzugsweise mindestens 95 % homofermentative Bakterien sind, die imstande sind, bei substantiellem Mangel vergärbarer Zucker durch Verbrauch von Milchsäure Essigsäure zu produzieren, wobei der gebrauchsfertige Brotsauerteig die folgenden Merkmale aufweist:
- einen pH zwischen 3,8 und 4,5, vorzugsweise zwischen 4,0 und 4,3,
- einen Gehalt an durch die Mikroorganismen vergärbaren Zuckern von unter 5 g/kg, vorzugsweise von unter 3 g/kg, und weiterhin vorzugsweise von unter 1 g/kg, und
- einen Vergärungsquotienten QF von unter oder gleich 4,75, vorzugsweise von unter oder gleich 4,00 und weiterhin vorzugsweise von unter oder gleich 3,00.

2. Gebrauchsfertiger Brotsauerteig nach Anspruch 1, **dadurch gekennzeichnet, dass** er einen Gehalt an Trockenmaterialien zwischen 12 und 50 % Massenanteil aufweist, vorzugsweise zwischen 13 und 35 % Massenanteil und weiterhin vorzugsweise zwischen 15 und 20 % Massenanteil.

3. Brotsauerteig nach einem der Ansprüche 1 und 2, **dadurch gekennzeichnet, dass** er Hefen enthält.

4. Brotsauerteig nach Anspruch 3, **dadurch gekennzeichnet, dass** er mindestens 10⁵, vorzugsweise mindestens 10⁶ und weiterhin vorzugsweise mindestens 5 × 10⁶ ufc/g Hefen enthält.

5. Brotsauerteig nach einem der vorangehenden Ansprüche, **dadurch gekennzeichnet, dass** er weiterhin eine enzymatische Zubereitung umfasst, die Amylase enthält.

6. Brotsauerteig nach einem der vorangehenden Ansprüche, **dadurch gekennzeichnet, dass** er seine fermentativen Eigenschaften des Teigs und insbesondere seine lebende Flora, die durch die Anzahl ufc **gekennzeichnet** ist, mindestens einen Monat behält, wenn er bei einer Temperatur von gleich oder unter 8°C aufbewahrt wird.

7. Brotsauerteig nach einem der vorangehenden Ansprüche, **dadurch gekennzeichnet, dass** er innerhalb eines Backschemas mit einer Gärzeit zwischen dem Beginn des Knetens und dem Beginn des Backens inklusive von weniger als 4 Stunden 30 Minuten erlaubt, ein Sauerteigbrot herzustellen, dessen Gärstoff im wesentlichen Sauerteig ist und dessen Krume **dadurch gekennzeichnet ist, dass** sie einen pH s 4,3, vorzugsweise ≤ 4,2, einen Gehalt an Essigsäure von mindestens 900 ppm Massenanteil und vorzugsweise einen Gehalt an Milchsäure von mindestens 4000 ppm Massenanteil aufweist.

8. Homofermentative biologisch transformierende Milchesäurebakterie der Milchsäure, die zum Stamm Lp 652 gehört, der am 16. Juli 2003 beim CNCM unter der Registriernummer CNCM I-3069 angemeldet wurde.

9. Verfahren zur Herstellung eines gebrauchsfertigen Brotsauerteigs nach einem der Ansprüche 1 bis 7, wobei innerhalb des Verfahrens:
- Mikroorganismen ausgewählt werden, wobei diese Auswahl Milchsäurebakterien enthält, inklusive homofermentative Milchsäurebakterien, die in der Lage sind, bei substantiellem Mangel vergärbarer Zucker durch Verbrauch von Milchsäure Essigsäure zu produzieren,
- ein Kulturmilieu auf der Basis von Mehl zubereitet wird, wobei das Kulturmilieu mindestens ein Getreidemehl und Wasser enthält,
- das Kulturmilieu auf Mehlbasis mit der Mikroorganismenauswahl beimpft wird,
- eine erste Gärung des Kulturmilieus auf Mehlbasis mittels dieser Mikroorganismenauswahl durchgeführt wird bis zum substantiellen Abbau der vergärbaren Zucker durch die Mikroorganismen der Auswahl, und
- bei substantiellem Mangel vergärbarer Zucker eine zweite Gärung des Kulturmilieus auf Mehlbasis durch die Mikroorganismen der Auswahl durchgeführt wird, wobei diese zweite Gärung bis zum Erhalt eines angestrebten QF im Kulturmilieu auf Mehlbasis fortgesetzt wird.

10. Verfahren zur Herstellung eines gebrauchsfertigen Brotsauerteigs nach einem der Ansprüche 1 bis 7, wobei innerhalb des Verfahrens:
- Mikroorganismen ausgewählt werden, wobei diese Auswahl Milchsäurebakterien enthält, inklusive homofermentative Milchsäurebakterien, die in der Lage sind, bei substantiellem Mangel vergärbarer Zucker durch Verbrauch von Milchsäure Essigsäure zu produzieren,
- ein erstes Kulturmilieu für Milchsäurebakterien zubereitet wird, das Wasser und die für das Wachstum der Milchsäurebakterien notwendigen Elemente enthält,
- dieses erste Kulturmilieu mit homofermentativen Milchsäurebakterien beimpft wird, die in der Lage sind, durch Verbrauch der Milchsäure der Mikroorganismenauswahl Essigsäure zu produzieren,
- eine erste Gärung des ersten Kulturmilieus mit diesen homofermentativen Milchsäurebakterien durchgeführt wird bis zum substantiellen Abbau der vergärbaren Zucker, und
- bei substantiellem Mangel vergärbarer Zucker eine zweite Gärung des ersten Kulturmilieus mit diesen homofermentativen Milchsäurebakterien durchgeführt wird, die in der Lage sind, durch Verbrauch von Milchsäure Essigsäure zu produzieren und diese zweite Gärung des ersten Kulturmilieus bis zum Erhalt eines angestrebten Zwischen-Gärungsquotienten QF im ersten Kulturmilieu fortgesetzt wird, so dass man eine Vorkultur homofermentativer Milchsäurebakterien erhält, und
- ein zweites Kulturmilieu auf Mehlbasis zubereitet wird, wobei das zweite Kulturmilieu auf Mehlbasis mindestens ein Getreidemehl und Wasser enthält,
- dieses zweite Kulturmilieu auf Mehlbasis mit den Mikroorganismen der Auswahl beimpft wird einerseits durch Inkorporierung der Vorkultur in das zweite Kulturmilieu und andererseits gegebenenfalls durch Beimpfung des Kulturmilieus auf Mehlbasis mit den Mikroorganismen der Auswahl, die nicht zur Zubereitung der Vorkultur herangezogen wurden,
- eine Gärung des Kulturmilieus auf Mehlbasis mittels dieser Mikroorganismenauswahl durchgeführt wird.

11. Herstellungsverfahren nach einem der Ansprüche 9 und 10, wobei die zweite Gärung bei Anwesenheit eines Elektronenacceptors durchgeführt wird.

12. Herstellungsverfahren nach Anspruch 11, wobei der Elektronenacceptor aus der Gruppe ausgewählt ist, die den Sauerstoff, das Citrat, die Fruktose, das Glycerol und die Kombinationen der genannten Elemente umfasst.

13. Herstellungsverfahren nach einem der Ansprüche 9 bis 12, wobei in Substanz die Gesamtheit und vorzugsweise die Gesamtheit der im Sauerteig vorhandenen Essigsäure und der eventuell im Sauerteig vorhandenen Milchsäure von den Mikroorganismen der Auswahl produziert wird.

14. Herstellungsverfahren nach einem der Ansprüche 9 bis 13, das einen Schritt der Aufbewahrung des derart hergestellten Brotsauerteigs bei einer Temperatur von gleich oder unter 8°C umfasst, vorzugsweise bei unter 4°C umfasst.

15. Gebrauchsfertiger Brotsauerteig, der nach dem Verfahren einer der Ansprüche 9 bis 14 herstellbar ist.

16. Verwendung eines gebrauchsfertigen Brotsauerteigs nach einem der Ansprüche 1 bis 7 und 15 bei der Zubereitung eines Sauerteigteigs für Bäckereiprodukte oder bei der Zubereitung eines gebackenen Bäckereiprodukts.

17. Verwendung eines gebrauchsfertigen Brotsauerteigs nach Anspruch 16 in einem direkten Backschema, das eine Zugabe von Backhefe von gleich oder unter 1% umfasst, vorzugsweise von gleich oder unter 0,6 % und weiterhin vorzugsweise von gleich oder unter 0,2 % Massenanteil im Verhältnis zum verwendeten Mehl.

18. Verwendung eines gebrauchsfertigen Brotsauerteigs nach einem der Ansprüche 16 und 17 in einem direkten Backschema, das einen einzigen Knetschnitt und einen Backschritt umfasst und eine geringere Dauer zwischen dem Beginn des Knetens und dem Beginn des Backens von gleich oder unter 6 Stunden, vorzugsweise von gleich oder unter 4 Stunden.

19. Verfahren zur Zubereitung eines gegorenen Teigs für Bäckereiprodukte oder ein gebackenes Bäckereiprodukt, wobei das Verfahren die Zubereitung eines Teigs mit mindestens den folgenden Zutaten Mehl, Wasser und gebrauchsfertiger Brotsauerteig nach einem der Ansprüche 1 bis 7 und 15 umfasst und die Gärung des derart zubereiteten Teigs.

20. Sauerteigteig für Bäckereiprodukte, der einen Brotsauerteig nach einem der Ansprüche 1 bis 7 und 15 umfasst.

21. Verwendung eines Brotsauerteigs nach einem der Ansprüche 1 bis 7 und 15 als Konservierungsmittel für gebackene Bäckereiprodukte, vorzugsweise nach teilweiser Deaktivierung der Mikroorganismen des Sauerteigs, weiterhin vorzugsweise nach totaler Deaktivierung der Mikroorganismen des Sauerteigs.
